(19) Europäisches Patentamt / European Patent Office / Office européen des brevets

(11) **EP 3 527 720 B1**

(12) **EUROPEAN PATENT SPECIFICATION**

(45) Date of publication and mention
of the grant of the patent:
**07.10.2020   Bulletin 2020/41**

(21) Application number: **17860509.3**

(22) Date of filing: **22.09.2017**

(51) Int Cl.:
*E01C 1/00* ^(2006.01)      *A63F 13/45* ^(2014.01)
*A63G 25/00* ^(2006.01)      *A63G 33/00* ^(2006.01)
*A63H 15/00* ^(2006.01)      *A63H 15/02* ^(2006.01)
*A63H 18/02* ^(2006.01)      *A63K 1/00* ^(2006.01)

(86) International application number:
**PCT/KR2017/010463**

(87) International publication number:
**WO 2018/070688 (19.04.2018 Gazette 2018/16)**

(54) **RACE CAR TRACK FOR ALLOWING NON-POWERED TRAVELING BY USING GRAVITY**

RENNWAGENSPUR ZUR ERMÖGLICHUNG DES FAHRENS OHNE ANTRIEB MITTELS
SCHWERKRAFT

PISTE DE VOITURES DE COURSE DESTINÉE À PERMETTRE UN DÉPLACEMENT NON
MOTORISÉ À L'AIDE DE LA GRAVITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **11.10.2016   KR 20160131193**

(43) Date of publication of application:
**21.08.2019   Bulletin 2019/34**

(73) Proprietor: **Monolith Inc.**
**Jeju-si, Jeju-do 63309 (KR)**

(72) Inventors:
• **KIM, Na Young**
  **Seoul 06505 (KR)**
• **KIM, Jong Seok**
  **Jeju-si**
  **Jeju-do 63082 (KR)**
• **JUNG, Jae Woong**
  **Ansan-si**
  **Gyeonggi-do 15399 (KR)**

(74) Representative: **M. Zardi & Co S.A.**
**Via G. B. Pioda, 6**
**6900 Lugano (CH)**

(56) References cited:
| | |
|---|---|
| CN-A- 103 446 756 | CN-Y- 201 139 939 |
| JP-A- H1 033 838 | JP-A- 2006 104 853 |
| KR-A- 20000 071 298 | KR-A- 20100 104 527 |
| KR-Y1- 200 255 923 | KR-Y1- 200 255 923 |
| US-A1- 2007 111 768 | US-A1- 2011 014 850 |

**Description**

BACKGROUND

The present invention relates to a customized track for driving a race car not provided with power device according to the preamble of claim 1.

A transverse acceleration refers to an acceleration that is applied to a lateral side of a direction in which a race car travels. When a race car travels on a curved lane, a force that pushes the race car to the outside of a corner is applied to the race car. The transverse acceleration refers to an acceleration that is applied to the race car due to the centrifugal force. When the transverse acceleration is high, a burden on the race car and the driver becomes bigger so that the difficulty level of the driving may increase. Further, because the race car may be slid when the centrifugal force that is higher than a frictional force between the race car and the road surface is applied, attention is required when the track is constituted.

A super elevation means that an outer side of a road is made to be higher than an inner side of the road at a curved part of the road. It means that an outer side of the road is made to be higher than an inner side of the road at a curved part of the road to prevent the car from sliding or deviating due to the centrifugal force.

US 2011/014850, CN 103 446 756 and US 2007/111768 are examples of race car tracks.

SUMMARY

The present invention relates to a customized track, for driving a race car not provided with power device, having the features of claim 1.

Further preferred embodiments are defined by the features of dependent claims 2-9.

BRIEF DESCRIPTION OF THE FIGURES

The above and other objects and features will become apparent from the following description with reference to the following figures, wherein like reference numerals refer to like parts throughout the various figures unless otherwise specified, and wherein:

FIG. 1 is a view illustrating a race car track for allowing non-powered driving using gravity according to an embodiment;
FIG. 2 is a view for explaining a method for setting a length and a slope of a straight lane of a track according to an embodiment;
FIG. 3 is a view for explaining a method for setting a super elevation of a curved lane of a track according to an embodiment;
FIG. 4 is a view for explaining a minimum radius of rotation;
FIG. 5 is a view illustrating a deceleration zone of a track according to an embodiment; and
FIG. 6 is a view illustrating an actual example of a race car track for allowing non-powered driving using gravity.

DETAILED DESCRIPTION

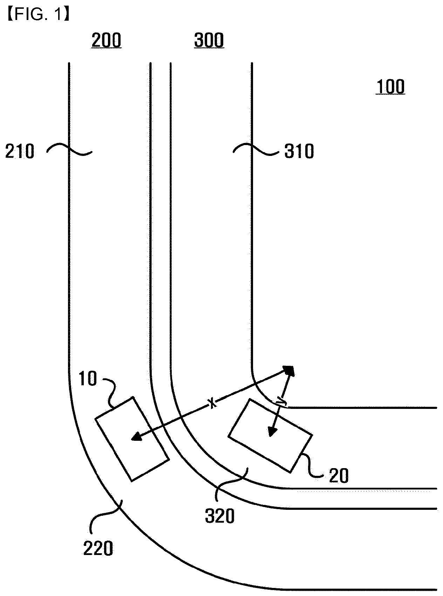

Referring to FIG. 1, the track 100 includes a first lane 200, and a second lane 300 that is adjacent to the first lane 200.

Referring to FIG. 1, race cars 10 and 20 that perform non-powered driving using gravity are illustrated. In an embodiment, the race car 10 travels on a first lane 200 and the race car 20 travels on a second lane 300. In the specification, unless otherwise defined, it is assumed for convenience of description that the sizes, shapes, and weights of the race cars 10 and 20 are the same.

The race cars 10 and 20 do not include any separate power device, and may travel on the track 100 by using gravity. The track 100 may include a downhill road having various longitudinal slopes. In an embodiment, a portion of the track 100 may include a flatland having no slope and an uphill road. However, a starting point of the track 100 has to be loaded at a site that is higher than an ending point of the track 100.

In an embodiment, the starting points and the ending points of the first lane 200 and the second lane 300 may be located on the same line, but the inventive concept is not limited thereto.

In an embodiment, the starting points of the first lane 200 and the second lane 300 may be located at the same height, but the inventive concept is not limited thereto.

In an embodiment, the ending points of the first lane 200 and the second lane 300 may be located at the same height, but the inventive concept is not limited thereto.

In an embodiment, the first lane 200 includes a straight lane 210 and a curved lane 220. In an embodiment, the second lane 300 includes a straight lane 310 and a curved lane 320.

In an embodiment, the curved lane 220 of the first lane 200 and the curved lane 320 of the second lane 300 may be located to be adjacent to each other.

In an embodiment, the curved lane 220 of the first lane 200 and the curved lane 320 of the second lane 300 have the same center. The center of the curved lane 220 of the first lane 200 and the center of the curved lane 320 of the second lane 300 may not coincide with each other, but may be located within a distance. For example, the center of the curved lane 220 of the first lane 200 and the center of the curved lane 320 of the second lane 300 may be located within 3 m from each other.

In an embodiment, the first lane 200 and the second lane 300 may include the same number of curved lanes.

In an embodiment, the first lane 200 and the second lane 300 may include the same number of straight lanes.

The straight lane 210 of the first lane 200 has a first slope. The straight lane 310 of the second lane 300 has a second slope.

The curved lane 220 of the first lane 200 has a first radius of rotation and a first super elevation, and the curved lane 320 of the second lane 300 has a second radius of rotation and a second super elevation.

The track 100 illustrated in FIG. 1 is for exemplary illustration, and the track 100 may a plurality of lanes including the first lane 200 and the second lane 300.

Similarly, the first lane 200 may further include a plurality of straight lanes including the first straight lane 210, and may further include a plurality of curved lanes including the first curved lane 220. The second lane 300 may further include a plurality of straight lanes including the second straight lane 310, and may further include a plurality of curved lanes including the second curved lane 320.

In an embodiment, the difficulty level, at which a car travels on the track 100, may be set. The difficulty level, at which a car travels on the track 100, may be determined based on the inclination of the track 100 and the magnitude of the transverse acceleration that is applied to the cars 10 and 20 in the curved lane zone.

For example, as the inclination of the track 100 increases, a longitudinal acceleration, by which the race cars 10 and 20 that travel on the track 100 may increase. Accordingly, as the inclination of the track 100 increases, the difficulty level, at which a car travels on the track 100, may increase.

Further, as the curved lane zone of the track 100 is curved steeper and the entrance speeds of the race cars 10 and 20 to the curved lanes become higher, the magnitudes of the transverse accelerations that are applied to the race cars 10 and 20 in the curved lane zone may become larger. In an embodiment, if the radius of rotation of the same curved lane zone decreases, the magnitude of the transverse acceleration, which is applied to the cars 10 and 20 from the curved lane zone may increase.

An increase of the magnitude of the transverse acceleration which is applied to the race cars 10 and 20 may mean that a force, by which the race cars 10 and 20 are pushed toward the outside of the track due to the centrifugal force increase. When the centrifugal force applied to the race cars 10 and 20 is higher than the frictional force between the race cars 10 and 20 and the track 100, the race cars 10 and 20 may pushed to the outside of the track. As a result, as the transverse acceleration applied to the race cars 10 and 20 in the curved lane zone of the track 100 increases, it becomes more difficult to control the race cars 10 and 20. Accordingly, as the transverse acceleration applied to the race cars 10 and 20 in the curved lane zone of the track 100 increases, the difficulty level of the track 100 may become higher.

Referring to FIG. 1, in spite that the first lane 200 and the second lane 300 are lanes of the same track, which are adjacent to each other, the radius (x) of rotation of the curved lane 220 of the first lane 200 and the radius (y) of rotation of the curved lane 320 of the second lane 300 are different.

Accordingly, the magnitude of the transverse acceleration applied to the race car 10 when the race car 10 travels on the curved lane 220 of the first lane 200 and the magnitude of the transverse acceleration applied to the race car 20 when the race car 20 travels on the curved lane 320 of the second lane 300 may be different. For example, when the race cars 10 and 20 enter the curved lanes at the same speed, the magnitude of the transverse acceleration applied to the race car 10 when the race car 10 travels on the curved lane 220 of the first lane 200 may be greater than the magnitude of the transverse acceleration applied to the race car 20 when the race car 20 travels on the curved lane 320 of the second lane 300.

In an embodiment, a competition may be made based on ranks in which a plurality of race cars arrive at an ending point of the track 100 after traveling on the track 100, periods of time that are consumed until the race cars arrive at the ending point of the track 100, and the like. In this case, the levels of difficulty of all the lanes included in the track 100 have to be set equally. Accordingly, the magnitude of the transverse acceleration applied to the race car 10 on the curved lane 220 of the first lane 200 and the magnitude of the transverse acceleration applied to the race car 20 on the curved lane 320 of the second lane 300 need to be set to be the same.

The sizes of the transverse accelerations applied to the race cars on the curved lanes may be adjusted by using super elevations of the curved lanes. For example, a first super elevation of the curved lane 220 of the first lane 200 and a second super elevation of the curved lane 320 of the second lane 300 may be set such that the magnitude of the transverse acceleration applied to the race car 10 on the curved lane 220 of the first lane 200 and the magnitude of the transverse acceleration applied to the race car 20 on the curved lane 320 of the second lane 300 are the same.

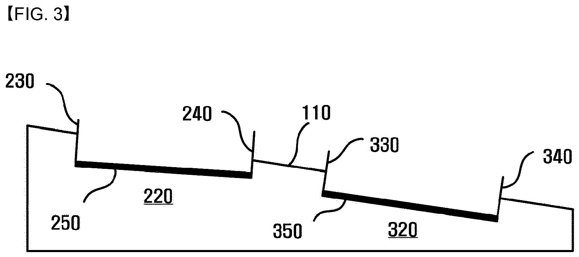

The method for setting the first super elevation and the second super elevation will be described in detail with reference to FIG. 3.

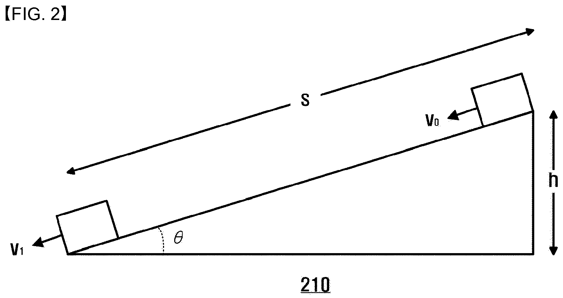

FIG. 2 is a view for explaining a method for setting a length and a slope of a straight lane of a track according to an embodiment.

In an embodiment, the levels of difficulty of the first lane 200 and the second lane 300 may be set differently. In FIG. 2, a method for setting the levels of difficulty of the first lane 200 and the second lane 300 to be the same will be described.

In order to set the levels of difficulty of the first lane 200 and the lane 300 to be the same, the lengths and the slopes of the straight lane 210 of the first lane 200 and the straight lane 310 of the second lane 300 may be set to be the same. Accordingly, for convenience of description, a method for setting a slope of a straight lane of the track 100 will be described with reference to the straight lane 210 of the first lane 200.

When the difficulty level of the first lane 200 is intended to be increased, a maximum speed which the race car 10 may reach while traveling on the straight lane 210 of the first lane 200 may be increased.

As a method for increasing the maximum speed which the race car 10 may reach while traveling on the straight lane 210 of the first lane 200, a longitudinal acceleration of the car 10 that travels on the straight lane 210 of the first lane 200 may be increased by increasing a slope ($\theta$) of the straight lane 210 of the first lane 200.

Further, as a method for increasing a maximum speed which the race car 10 may reach while traveling on the straight lane 210 of the first lane 200, the length of the straight lane 210 of the first lane 200 may be increased.

Let's assume that the speed of the race car 10 at a starting point of the straight lane 210 of the first lane 200 is $v_0$ and the speed of the race car 10 at an ending point of the straight lane 210 of the first lane is $v_1$. $v_1$ may be calculated by using equation 1 when a longitudinal acceleration applied to the race car 10 when the race car 10 travels on the straight lane 210 of the first lane 200 is $a_i$ and a period of time that is taken for the race car 10 travels on the straight lane 210 of the first lane 200 is t.

[Equation 1]

$$v_1 = v_0 + (a_i \times t)$$

Further, the length s of the straight lane 210 of the first lane 200 may be calculated by using Equation 2.

[Equation 2]
$$s = v_0 \times t + \frac{(a_i \times t + v_0)}{2} \times t$$

Further, when the weight of the race car 10 is m, Equation 3 is established.

[Equation 3]

$$m \times g \times h = m \times a_i \times s$$

In Equation 3, g denotes the gravitational acceleration and h denotes a height difference between a starting point and an ending point of the straight line 210 of the first lane 200.

By using Equations 1 to 3, the length and slope of the straight lane that is suitable for the difficulty level of the track 100 may be determined.

In Equations 1 to 3, the unit for $v_0$ and $v_1$ may be m/s, the unit for $a_i$ may be $m/s^2$, and the unit for t may be sec.

FIG. 3 is a view for explaining a method for setting a super elevation of a curved lane of a track according to an embodiment.

In an embodiment, the levels of difficulty of the first lane 200 and the second lane 300 may be set differently. In FIG. 3, a method for setting the levels of difficulty of the first lane 200 and the lane 300 to be the same will be described.

The curved lane of the track 100 refers to a lane in the form of a curve having a specific radius of rotation, which is connected in the tangential direction of the straight lane of the track 100. The difficulty level of the curved lane of the track 100 may be determined based on the speeds at which the race cars 10 and 20 enter the curved lanes, and the magnitudes of the transverse accelerations applied to the race cars 10 and 20 while the race cars 10 and 20 travel on the curved lanes.

In an embodiment, the radius of rotation of the curved lane 220 of the first lane 200 may be larger than the radius of rotation of the curved lane 320 of the second lane 300.

In an embodiment, the levels of difficulty of the curved lane 220 of the first lane 200 and the curved lane 320 of the second lane 300 may be set to be the same by making the transverse acceleration applied to the race car 10 that travels on the curved lane 220 of the first lane 200 and the transverse acceleration applied to the race car 20 that travels on the curved lane 320 of the second lane 300 the same.

First, the transverse acceleration values $a_{ocf}$ applied to the race cars 10 and 20 on the curved lane 220 of the first lane 200 and the curved lane 320 of the second lane 300 may be determined. When the speed of the race car 10 that enters the curved lane 220 of the first lane 200 is v, the radius of rotation of the curved lane 220 of the first lane 200 is r, and the super elevation of the curved lane 220 of the first lane 200 is i, the super elevation i of the curved lane 220 of the first lane 200 is determined by using Equation 4.

[Equation 4]

$$a_{ocf} = \frac{v^2}{127r} - i$$

In Equation 4, the unit for $a_{ocf}$ may be g (the gravitational acceleration), the unit for v may be km/h, the unit for r may be m, and the unit for i may be %.

Similarly, when the speed of the race car 20 that enters the curved lane 320 of the second lane 300 is v, the radius of rotation of the curved lane 320 of the second lane 300 is r, and the super elevation of the curved lane 320 of the second lane 300 is i, the super elevation i of the curved lane 320 of the second lane 300 may be calculated by using Equation 4.

For example, the radius of rotation of the curved lane 220 of the first lane 200 may be 15 m, and and the radius of the curved lane 320 of the second lane 300 may be 10.8 m. When it is assumed that the race cars 10 and 20 are set to enter the curved lanes 220 and 320 of the first lane 200 and the second lane 300 at the speed of 30 km/h, the same transverse acceleration may be applied to the race cars 10 and 20 if the super elevation of the curved lane 220 of the first lane 200 is 10% and the super elevation of the curved lane 320 of the second lane 300 is 29%.

As another example, the radius of rotation of the curved lane 220 of the first lane 200 may be 19.2 m, and and the radius of the curved lane 320 of the second lane 300 may be 15 m. When it is assumed that the race cars 10 and 20 are set to enter the curved lanes 220 and 320 of the first lane 200 and the second lane 300 at the speed of 30 km/h, the same transverse acceleration may be applied to the race cars 10 and 20 if the super elevation of the curved lane 220 of the first lane 200 is 0% and the super elevation of the curved lane of the second lane 300 is 10%.

As another example, when it is assumed that the race cars 10 and 20 are set to enter the curved lanes 220 and 320 of the first lane 200 and the second lane 300 at the speed of 30 km/h, the different transverse acceleration may be applied to the race cars 10 and 20 if the super elevation of the curved lane 220 of the first lane 200 is 10% and the super elevation of the curved lane 320 of the second lane 300 is set to have the same super elevation of 10%.

Accordingly, the speed at which the race car 10 enters the curved lane 220 of the first lane 200 and the speed at which the race car 20 enters the curved lane 320 of the second lane 300 may be different. Even in this case, the levels of difficulty of the curved lane 220 of the first lane 200 and the curved lane 320 of the second lane 300 may be set to be the same by setting the super elevation of the curved lane 220 of the first lane 200 and the super elevation of the curved lane 320 of the second lane 300 such that the transverse acceleration $a_{ocf}$ obtained by inserting the speed at which the race car 10 enters the curved lane 220 of the first lane 200 into v of Equation 4 is the same as transverse acceleration $a_{ocf}$ obtained by inserting the speed at which the race car 20 enters the curved lane 320 of the second lane 300 into v.

In an embodiment, the transverse acceleration $a_{ocf}$ may be set such that the race cars 10 and 20 are not slid when traveling on the curved lanes. The race cars 10 and 20 may slid when the centrifugal forces applied to the race cars 10 and 20 when the race cars 10 and 20 travel on the curved lanes are equal to or greater than the road frictional forces applied to the race cars 10 and 20.

The transverse accelerations applied to the race cars 10 and 20 are applied to the centers of weight of the race cars 10 and 20 including the drivers. For convenience of description, it is assumed in the specification that the race cars 10 and 20 include the drivers. Accordingly, the transverse accelerations applied to the race cars 10 and 20 are applied to the centers of weight of the race cars 10 and 20.

When the weights of the race cars 10 and 20 are m, the frictional coefficient between the road surfaces and the race cars 10 and 20 is $\mu$, and the radius of rotation of the curved lanes is r, the travel speed v of the race cars 10 and 20 on the curved lanes that prevents the race cars 10 and 20 from being slid on the curved lanes of the track 100 by the centrifugal force may be calculated by using Equation 5.

[Equation 5]

$$v = \sqrt{127\mu r}$$

In an embodiment, the race cars 10 and 20 may be prevented from being slid even at a higher speed by adding the super elevations G to the curved lanes of the track 100. In the curved lanes of the track 100 having a super elevation G, the travel speeds v of the race cars 10 and 20 on the curved lanes, which prevents the race cars 10 and 20 from being slid on the curved lanes of the track 100 by the centrifugal force may be calculated by using Equation 6.

[Equation 6]

$$v = \sqrt{127r(\mu + G)}$$

The curved lanes of the track 100 may allow the drivers of the race cars 10 and 20 to feel thrills by setting the curved lanes such that a maximum transverse acceleration is applied within a range in which the race cars 10 and 20 are prevented from being slid.

Referring to FIG. 3, the first lane 200 and the second lane 300 may further include fences 230, 240, 330, and 340 for preventing deviation of the cars. Further, a spacing 110 may be present between the first lane 200 and the second lane 300.

In an embodiment, the width of the spacing between the first lane 200 and the second lane 300 may be set to be narrower than the widths of the first lane 200 and the second lane 300.

In an embodiment, the width of the spacing 110 between the first lane 200 and the second lane 300 may be set not to exceed 3 m.

Further, the first lane 200 and the second lane 300 may include road surface support parts 250 and 350 that constitute the road surfaces of the first lane 200 and the second lane 300. In an embodiment, the road surface support parts 250 and 350 may be set to be rotatable laterally or vertically within a specific angle. The road surface support parts 250 and 350 may be rotated laterally or vertically to adjust the slopes and the super elevations of the first lane 200 and the second lane 300.

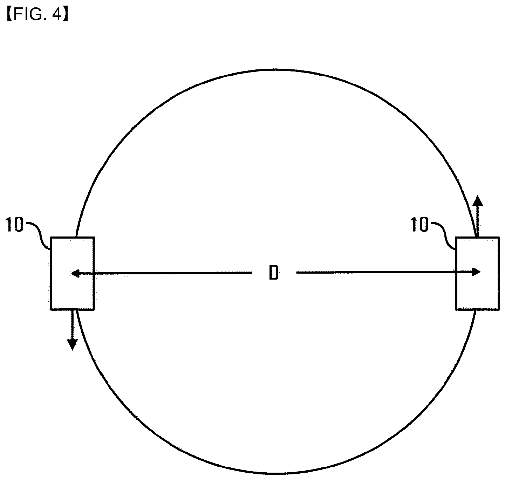

FIG. 4 is a view for explaining a minimum radius of rotation.

In an embodiment, minimum radii of rotation of the race cars 10 and 20 may be measured. The minimum radius of rotation refers to a minimum radius that is necessary for the race cars 10 and 20 to rotate by 180 degrees.

Referring to FIG. 4, the diameter D of rotation may be measured by fully rotating the steering wheel of the race car 10 to one side, driving the race car 10, and rotating the race car 10 by 180 degrees. The minimum radius of rotation may be a value D/2 that is obtained by dividing the diameter D of rotation by 2.

In an embodiment, the minimum radius of rotation may be set based on the minimum radius of rotation of the race car 10. For example, the minimum radius of rotation of the track 100 may be set to be equal to or greater than the minimum radius of rotation of the race car 10.

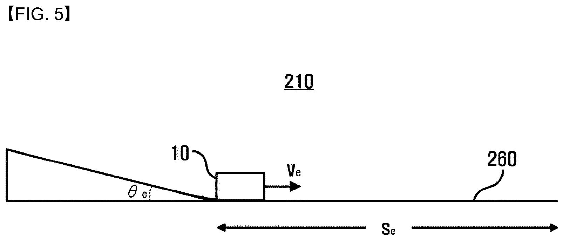

FIG. 5 is a view illustrating a deceleration zone of a track according to an embodiment.

Referring to FIG. 5, a first lane 210 and a deceleration zone 260 of the first lane 210 are illustrated. FIG. 5 illustrates a deceleration zone of the track 100 with reference to the first lane 210. In FIG. 5, the contents described for the first lane 210 and the deceleration zone 260 of the first lane 210 may be applied to all lanes included in the track 100.

In an embodiment, the race car 10 may not include a separate deceleration device. In this case, when the race car 10 finishes traveling on the first lane 210, a deceleration zone 260 that may safely stop the race car 10 may be necessary.

In an embodiment, the deceleration zone 260 may include a flatland, or may include an uphill road. Further, the deceleration zone 260 may include a combination of a flatland and an uphill road.

When the deceleration zone 260 includes a flatland, the race car 10 may be stopped by using friction between the race car 10 and the road surface of the deceleration zone 260. When the deceleration zone 260 includes an uphill road, the race car 10 may be stopped by using the friction between the race car 10 and the road surface of the deceleration zone 260 and a principle of converting kinetic energy to locational energy as the race car 10 travels on the uphill road.

In an embodiment, the slope of the first lane 210 may become lower as it becomes closer to the deceleration zone 260. The slope $\theta_e$ of the first lane 210 that is adjacent to the deceleration zone 260 may be lower than an average slope of the first lane 210. Accordingly, the acceleration of the race car 10 may rather decrease before the race car 10 enters the deceleration zone 260.

When the speed of the race car 10 when the race car 10 enters the deceleration zone 260 is ve, the length se of the deceleration zone 260 may be set such that the race car 10 is stopped before the race car 10 reaches an end of the deceleration zone 260. For example, when the race car 10 travels in the deceleration zone 260 by se, the speed of the race car 10 may be set to be 0.

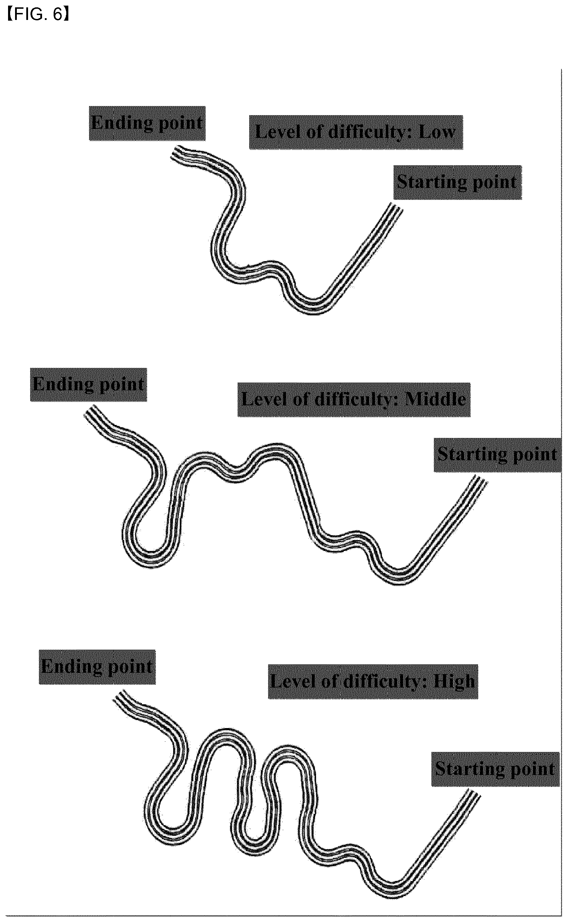

FIG. 6 is a view illustrating an actual example of a race car track for allowing non-powered driving using gravity according to the difficulty level.

Referring to FIG. 6, the track 100 may include a plurality of lanes. Each of the plurality of lanes included in the track 100 may include a plurality of straight lanes and a plurality of curved lanes.

In an embodiment, the length and slope of the straight lane and the super elevation of the curved lane may be adjusted to set the difficulty level of the track 100.

Further, the difficulty level of the track 100 also may be adjusted according to the radii of rotation of the curved lanes, the lengths of the curved lanes, the number of curved lanes, and the arrangement method of the curved lanes. For example, the difficulty level of the track 100 may become higher because abrupt rotations have to be made if the length of the curved lane is large while the radius of rotation of the curved lane is small.

Further, the difficulty level of the track 100 may become higher because more rotation manipulations are necessary as the number of curved lanes included in the track 100 becomes larger.

Further, the difficulty level of the track 100 may become higher because more rotation manipulations for abrupt switching of directions are necessary as the number of curved lanes included in the track 100 becomes shorter.

Further, the difficulty level of the track 100 may become higher because the centrifugal forces applied to the race cars 10 and 20 and the directions of the transverse accelerations according to the centrifugal forces are abruptly changed and the rotational manipulations may be difficult if a curved lane on one direction extends immediately after a curved lane in an opposite direction is ended.

Hereinafter, Table 1 describes an example of classifying the levels of difficulty of the track 100 based on the speeds of the race cars 10 and 20 that travel on the track 100, the numbers of driving manipulations, and the transverse accelerations. Table 1 is described for an example, and a reference for classifying the difficulty level of the track 100 is not limited thereto.

[Table 1]

| Classification of difficulty level | Speed [km/h] | Number of driving manipulations | Transverse acceleration [m/s$^2$] |
|---|---|---|---|
| High | 40 to 50 | Large | 0.64 g to 0.8 g |
| Middle | 30 to 40 | Middle | 0.47 g to 0.64 g |
| Low | up to 30 | Small | up to 0.47 g |

In an embodiment, the driving manipulation refers to a direct manipulation, which as steering or deceleration, which is made by the driver who drives the race car 10 and 20. A factor that influences the number of driving manipulations may include a straightness, a turning factor, an inclination of the track 100, and the width of the track.

In an embodiment, the number of driving manipulations may be classified into large, middle, and small. The reference for this may be the number of manipulations that are necessary for turning 180 degrees and ending cornering.

In an embodiment, the speed may be set with reference to a maximum speed that may be obtained when it is assumed that the car travels straight between a starting point and an ending point of the track 100.

When the car travels on a general road, the transverse acceleration that may be felt by the driver is about 0.3 g. According to the disclosed embodiment, the driver may be allowed to experience a transverse acceleration that corresponds up to 0.8 g that reaches a limit value of a road surface frictional coefficient of the track 100 of 0.8.

The steps of a method or an algorithm that have been described in relation to the embodiments of the inventive concept may be directly implemented by hardware, may be implemented by a software module executed by hardware, or may be implemented by a combination thereof. The software module may reside in a random access memory (RAM), a read only memory (ROM), an erasable programmable ROM (EPROM), an electrically erasable programmable ROM (EEPROM), a flash memory, a hard disk, a detachable disk, a CD-ROM, a cloud server, or a computer readable recording medium in an arbitrary form, which is well known in the art to which the inventive concept pertains.

In a race car track including a plurality of lanes, the radii of rotation may be differently set for the lanes when the track includes curved lanes. In this case, the centrifugal forces applied to the race cars that travel on the lanes and the transverse accelerations according to the centrifugal forces may be differently determined. In the race car track including a plurality of lanes, setting of the levels of difficulty of the lanes accurately and in an intended way is important for fair and various competitions.

According to the disclosed embodiment, the levels of difficulty of the lanes may be set to be the same by adjusting the super elevations according to the rotation radii of the plurality of lanes. Accordingly, the plurality of race cars may make fair competition regardless of the lanes.

Further, the driver may feel thrills of the driving as if he or she were on a ride while safety is secured, by setting the race car such that the driver may experience a maximum transverse acceleration while the race car is not slid.

**Claims**

1.  A customized track (100) for driving a race car (10, 20) not provided with power device, using gravity, wherein a starting point of the track (100) is located at a site that is higher than an ending point of the track (100), wherein a length, a slope, a radius of rotation, and a super elevation of the track (100) are designed to drive the race car (10, 20) at at least one of a predetermined longitudinal acceleration and a predetermined transverse acceleration corresponding to a difficulty level, **characterized by** the fact that
    the track includes
    a first lane (200) including a first curved lane (220); and
    a second lane (300) including a second curved lane (320) having a same center as the first curved lane (220),
    wherein the first curved lane (200) has a first super elevation that allows the first lane (200) to have a first difficulty level,
    wherein the second curved lane (300) has a second super elevation that allows the second lane (300) to have a second difficulty level,
    wherein the slopes that allow driving of the race car (10, 20) using gravity from the starting point to the ending point of the track are provided at least a portion of each of the first and second lanes of the track (100),
    wherein the first difficulty level and the second difficulty level are determined by at least one of the longitudinal acceleration and the transverse acceleration that is applied to the race car when the race car travels respectively on the first curved lane (220) and the second curved lane (320) by using the slopes of the first curved lane (220) and the second curved lane (320), and
    wherein the super elevation i of the first curved lane (220) or the second curved lane (320) is determined by the following equation when a speed at which the race car (10, 20) that performs the driving enters the first curved lane (220) or the second curved lane (320) is v, the radius of rotation of the first curved lane (220) or the second curved lane (320) is r, and the transverse acceleration applied to the race car (10, 20) that performs the non-powered driving on the first curved lane (220) or the second curved lane (320) is a,

$$i = \frac{v^2}{127r} - a$$

2.  The track (100) of claim 1, wherein the first super elevation and the second super elevation are differently set such that magnitudes of the transverse acceleration applied to the race car (10, 20) that performs the driving when the race car (10, 20) travels by using the slope of the first curved lane (220) and the transverse acceleration applied to the race car (10, 20) that performs the driving when the race car (10, 20) travels by using the slope of the second curved lane (320) are the same so that the first difficulty level and the second difficulty level are set to be the same.

3.  The track (100) of claim 1, wherein the first super elevation and the second super elevation are set to be the same such that magnitudes of the transverse acceleration applied to the race car (10, 20) that performs the driving when the race car (10, 20) travels by using the slope of the first curved lane (220) and the transverse acceleration applied to the race car (10, 20) that performs the driving when the race car (10, 20) travels by using the slope of the second curved lane (320) are different so that the first difficulty level and the second difficulty level are set to be different.

4.  The track (100) of claim 1, wherein the first super elevation is set such that a centrifugal force applied to the race car (10, 20) that performs the driving when the race car (10, 20) travels on the slope of the first curved lane (220) is not more than a frictional force between wheels of the race car (10, 20) performing the driving and a road surface of the first lane (200), and
    wherein the second super elevation is set such that a centrifugal force applied to the race car (10, 20) that performs the driving when the race car (10, 20) travels on the slope of the second curved lane (320) is not more than a frictional force between the wheels of the race car (10, 20) performing the driving and a road surface of the second lane.

5.  The track (100) of claim 1, wherein the radius of rotation of the first curved lane (220) and the radius of rotation of the second curved lane (320) are equal to or greater than a minimum radius of rotation of the race car (10, 20) that performs the driving.

6.  The track (100) of claim 1, wherein the first lane (200) and the second lane (300) include a straight lane (210, 310) having first slopes, and
wherein the first slopes are set such that the longitudinal acceleration of the race car (10, 20) that performs the driving does not exceed a preset threshold longitudinal acceleration.

7. The track (100) of claim 1, wherein the first lane (200) and the second lane (300) further include road surface support parts (250, 350) that support road surfaces of the first lane and the second lane, and
wherein the road surface support parts (250, 350) are set to be rotated laterally or vertically and are configured to adjust the slopes and super elevations of the first lane (200) and the second lane(300).

8. The track (100) of claim 1, further comprising:

deceleration zones provided at ending points of the first lane (200) and the second lane (300),
wherein the deceleration zone includes a flatland or an uphill road, and
wherein the lengths of the deceleration zones are set such that the race car (10, 20) that performs the driving is stopped before reaching ends of the deceleration zones.

9. The track of claim 1, wherein the difficulty level of the track is determined based on at least one of the slope and length of the straight lane included in the track (100), the super elevation, length, and radius of rotation of the curved lane included in the track (100), the widths of the lanes of the track, the spacing distance (110) between the lanes, the number of curved lanes, and the distance between the curved lanes included in the track (100).


**Patentansprüche**

1. Maßgefertigte Strecke (100) zum Fahren eines nicht mit einer Antriebsvorrichtung versehenen Rennwagens (10, 20) unter Verwendung der Schwerkraft, wobei

sich ein Startpunkt der Strecke (100) an einer Stelle befindet, die höher als ein Endpunkt der Strecke (100) ist, wobei eine Länge, eine Neigung, ein Drehradius, und eine Überhöhung der Strecke (100) dazu ausgelegt sind, den Rennwagen (10, 20) bei wenigstens einer einer vorgegebenen Längsbeschleunigung und einer vorgegebenen Querbeschleunigung entsprechend einem Schwierigkeitslevel anzutreiben, **dadurch gekennzeichnet, dass**
die Strecke
eine erste Bahn (200) umfassend eine erste gekrümmte Bahn (220); und
eine zweite Bahn (300) umfassend eine zweite gekrümmte Bahn (320) umfasst, die ein gleiches Zentrum wie die erste gekrümmte Bahn (220) aufweist,
wobei die erste gekrümmte Bahn (200) eine erste Überhöhung aufweist, die es der ersten Bahn (200) erlaubt, ein erstes Schwierigkeitslevel aufzuweisen,
wobei die zweite gekrümmte Bahn (300) eine zweite Überhöhung aufweist, die es der zweiten Bahn (300) erlaubt, ein zweites Schwierigkeitslevel aufzuweisen,
wobei die Neigungen, die ein Antreiben des Rennwagens (10, 20) unter Verwendung der Schwerkraft vom Startpunkt bis zum Endpunkt der Strecke erlauben, an wenigstens einem Abschnitt von jedem der ersten und der zweiten Bahn der Strecke (100) vorgesehen sind,
wobei das erste Schwierigkeitslevel und das zweite Schwierigkeitslevel durch wenigstens eine der Längsbeschleunigung und der Querbeschleunigung bestimmt sind, die auf den Rennwagen aufgebracht werden, wenn der Rennwagen sich jeweils auf der ersten gekrümmten Bahn (220) und der zweiten gekrümmten Bahn (320) durch Verwenden der Neigungen der ersten gekrümmten Bahn (220) und der zweiten gekrümmten Bahn (320) bewegt, und
wobei die Überhöhung i der ersten gekrümmten Bahn (220) oder der zweiten gekrümmten Bahn (320) durch die folgende Gleichung bestimmt ist, wenn eine Geschwindigkeit, mit der der Rennwagen (10, 20), der das Fahren durchführt, in die erste gekrümmte Bahn (220) oder die zweite gekrümmte Bahn (320) eintritt, v ist, der Drehradius der ersten gekrümmten Bahn (220) oder der zweiten gekrümmten Bahn (320) r ist, und die Querbeschleunigung, die auf den Rennwagen (10, 20) aufgebracht wird, der das nichtangetriebene Fahren auf der ersten gekrümmten Bahn (220) oder der zweiten gekrümmten Bahn (320) durchführt, a ist,

$$i = \frac{v^2}{127r} - a$$

**2.** Strecke (100) nach Anspruch 1, wobei die erste Überhöhung und die zweite Überhöhung unterschiedlich eingestellt sind, derart, dass Größen der Querbeschleunigung, die auf den Rennwagen (10, 20) aufgebracht wird, der das Fahren durchführt, wenn sich der Rennwagen (10, 20) durch Verwenden der Neigung der ersten gekrümmten Bahn (220) bewegt, und der Querbeschleunigung, die auf den Rennwagen (10, 20) aufgebracht wird, der das Fahren durchführt, wenn sich der Rennwagen (10, 20) durch Verwenden der Neigung der zweiten gekrümmten Bahn (320) bewegt, gleich sind, so dass das erste Schwierigkeitslevel und das zweite Schwierigkeitslevel dazu eingestellt sind, gleich zu sein.

**3.** Strecke (100) nach Anspruch 1, wobei die erste Überhöhung und die zweite Überhöhung dazu eingestellt sind, gleich zu sein, derart, dass Größen der Querbeschleunigung, die auf den Rennwagen (10, 20) aufgebracht wird, der das Fahren durchführt, wenn sich der Rennwagen (10, 20) durch Verwenden der Neigung der ersten gekrümmten Bahn (220) bewegt, und der Querbeschleunigung, die auf den Rennwagen (10, 20) aufgebracht wird, der das Fahren durchführt, wenn sich der Rennwagen (10, 20) durch Verwenden der Neigung der zweiten gekrümmten Bahn (320) bewegt, unterschiedlich sind, so dass das erste Schwierigkeitslevel und das zweite Schwierigkeitslevel dazu eingestellt sind, unterschiedlich zu sein.

**4.** Strecke (100) nach Anspruch 1, wobei die erste Überhöhung derart eingestellt ist, dass eine Zentrifugalkraft, die auf den Rennwagen (10, 20) aufgebracht wird, der das Fahren durchführt, wenn sich der Rennwagen (10, 20) auf der Neigung der ersten gekrümmten Bahn (220) bewegt, nicht mehr als eine Reibungskraft zwischen Rädern des Rennwagens (10, 20), der das Fahren durchführt, und einer Fahrbahnoberfläche der ersten Bahn (200) ist, und wobei die zweite Überhöhung derart eingestellt ist, dass eine Zentrifugalkraft, die auf den Rennwagen (10, 20) aufgebracht wird, der das Fahren durchführt, wenn sich der Rennwagen (10, 20) auf der Neigung der zweiten gekrümmten Bahn (320) bewegt, nicht mehr als eine Reibungskraft zwischen den Rädern des Rennwagens (10, 20), der das Fahren durchführt, und einer Fahrbahnoberfläche der zweiten Bahn ist.

**5.** Strecke (100) nach Anspruch 1, wobei der Drehradius der ersten gekrümmten Bahn (220) und der Drehradius der zweiten gekrümmten Bahn (320) gleich einem oder größer als ein Minimaldrehradius des Rennwagnes (10, 20) ist, der das Fahren durchführt.

**6.** Strecke (100) nach Anspruch 1, wobei die erste Bahn (200) und die zweite Bahn (300) eine gerade Bahn (210, 310) umfassen, die erste Neigungen aufweist, und
wobei die ersten Neigungen derart eingestellt sind, dass die Längsbeschleunigung des Rennwagens (10, 20), der das Fahren durchführt, eine vorgegebene Schwellenlängsbeschleunigung nicht übersteigt.

**7.** Strecke (100) nach Anspruch 1, wobei die erste Bahn (200) und die zweite Bahn (300) ferner Fahrbahnoberflächenträgerteile (250, 350) umfassen, die Fahrbahnoberflächen der ersten Bahn und der zweiten Bahn tragen, und
wobei die Fahrbahnoberflächenträgerteile (250, 350) dazu eingestellt sind, lateral oder vertikal gedreht zu werden, und dazu konfiguriert sind, die Neigungen und Überhöhungen der ersten Bahn (200) und der zweiten Bahn (300) einzustellen.

**8.** Strecke (100) nach Anspruch 1, ferner umfassend:

Verzögerungszonen, die an Endpunkten der ersten Bahn (200) und der zweiten Bahn (300) vorgesehen sind, wobei die Verzögerungszone eine ebene oder eine ansteigende Fahrbahn umfasst, und
wobei die Längen der Verzögerungszonen derart eingestellt sind, dass der Rennwagen (10, 20), der das Fahren durchführt, gestoppt wird, bevor er Enden der Verzögerungszonen erreicht.

**9.** Strecke nach Anspruch 1, wobei das Schwierigkeitslevel der Strecke basierend auf wenigstens einer der Neigung und der Länge der in der Strecke (100) umfassten geraden Bahn, der Überhöhung, Länge und dem Drehradius der in der Strecke (100) umfassten gekrümmten Bahn, den Breiten der Bahnen der Strecke, der Abstandsdistanz (110) zwischen den Bahnen, der Anzahl von gekrümmten Bahnen, und der Distanz zwischen den in der Strecke (100) umfassten gekrümmten Bahnen bestimmt ist.

**Revendications**

1. Piste personnalisée (100) pour la conduite d'une voiture de course (10, 20) non équipée d'un dispositif de motorisation, utilisant la gravité, dans laquelle

   un point de départ de la piste (100) est situé au niveau d'un site qui est plus élevé qu'un point terminal de la piste (100), où une longueur, une déclivité, un rayon de rotation et une super dénivellation de la piste (100) sont conçus pour entraîner la voiture de course (10, 20) à au moins une parmi une accélération longitudinale prédéterminée et une accélération longitudinale transversale prédéterminée correspondants à un niveau de difficulté, **caractérisé en ce que**
   la piste inclut
   une première voie (200) incluant une première voie incurvée (220) et
   une deuxième voie (300) incluant une deuxième voie incurvée (320) présentant un même centre que la première voie incurvée (220),
   où la première voie incurvée (200) présente une première super dénivellation qui permet à la première voie (200) de présenter un premier niveau de difficulté,
   où la deuxième voie incurvée (300) présente une deuxième super dénivellation qui permet à la deuxième voie (300) de présenter un deuxième niveau de difficulté,
   où les déclivités qui permettent l'entraînement de la voiture de course (10, 20) en utilisant la gravité depuis le point de départ jusqu'au point terminal de la piste sont prévues au niveau d'au moins une partie de chacune des premières et deuxièmes voies de la piste (100),
   où le premier niveau de difficulté et le deuxième niveau de difficulté sont déterminés par au moins une parmi l'accélération longitudinale et l'accélération transversale qui est appliquée à la voiture de course quand la voiture de course se déplace respectivement sur la première voie incurvée (220) et la deuxième voie incurvée (320) en utilisant les déclivités de la première voie incurvée (220) et de la deuxième voie incurvée (320) et
   où la super dénivellation i de la première voie incurvée (220) ou de la deuxième voie incurvée (320) est déterminée par l'équation suivante quand une vitesse à laquelle la voiture de course (10, 20) qui réalise la conduite entre sur la première voie incurvée (220) ou la deuxième voie incurvée (320) est v, le rayon de rotation de la première voie incurvée (220) ou de la deuxième voie incurvée (320) est r et l'accélération transversale appliquée à la voiture de course (10, 20) qui réalise la conduite non motorisée sur la première voie incurvée (220) ou la deuxième voie incurvée (320) est a,

$$i = \frac{v^2}{127r} - a$$

2. Piste (100) selon la revendication 1, **caractérisée en ce que** la première super dénivellation et la deuxième super dénivellation sont réglées différemment si bien que les ordres de grandeur de l'accélération transversale appliquées à la voiture de course (10, 20) qui réalise la conduite quand la voiture de course (10, 20) se déplace en utilisant la déclivité de la première voie incurvée (220) et l'accélération transversale appliquée à la voiture de course (10, 20) qui réalise la conduite quand la voiture de course (10, 20) se déplace en utilisant la déclivité de la deuxième voie incurvée (320) sont les mêmes si bien que le premier niveau de difficulté et le deuxième niveau de difficulté sont réglés pour être identiques.

3. Piste (100) selon la revendication 1, **caractérisée en ce que** la première super dénivellation et la deuxième super dénivellation sont réglées pour être identiques si bien que les ordres de grandeur de l'accélération transversale appliquée à la voiture de course (10, 20) qui réalise la conduite quand la voiture de course (10, 20) se déplace en utilisant la déclivité de la première voie incurvée (220) et l'accélération transversale appliquée à la voiture de course (10, 20) qui réalise la conduite quand la voiture de course (10, 20) se déplace en utilisant la déclivité de la deuxième voie incurvée (320) sont différentes si bien que le premier niveau de difficulté et le deuxième niveau de difficulté sont réglés pour être différents.

4. Piste (100) selon la revendication 1, **caractérisée en ce que** la première super dénivellation est réglée de telle manière que la force centrifuge appliquée à la voiture de course (10, 20) qui réalise la conduite quand la voiture de course (10, 20) se déplace sur la déclivité de la première voie incurvée (220) n'est pas supérieure à la force de friction entre les roues de la voiture de course (10, 20) réalisant la conduite et la surface de circulation de la première voie (200) et
   **en ce que** la deuxième super dénivellation est réglée de telle manière que la force centrifuge appliquée à la voiture de course (10, 20) qui réalise la conduite quand la voiture de course (10, 20) se déplace sur la déclivité de la deuxième voie incurvée (220) n'est pas supérieure à la force de friction entre les roues de la voiture de course (10, 20) réalisant la conduite et la surface de circulation de la deuxième voie (200).

5. Piste (100) selon la revendication 1, **caractérisée en ce que** le rayon de rotation de la première voie incurvée (220) et le rayon de rotation de la deuxième voie incurvée (320) sont égaux ou supérieurs au rayon minimum de rotation de la voiture de course (10, 20) qui réalise la conduite.

6. Piste (100) selon la revendication 1, **caractérisée en ce que** la première voie (200) et la deuxième voie (300) incluent une voie rectiligne (210, 310) présentant des premières déclivités et
**en ce que** les premières déclivités sont réglées de telle manière que l'accélération longitudinale de la voiture de course (10, 20) qui réalise la conduite ne dépasse pas une accélération longitudinale de seuil préréglée.

7. Piste (100) selon la revendication 1, **caractérisée en ce que** la première voie (200) et la deuxième voie (300) incluent en outre des pièces de support de la surface de circulation (250, 350) qui supportent les surfaces de circulation de la première voie et de la deuxième voie et
**en ce que** les pièces de support de la surface de circulation (250, 350) sont réglées pour pouvoir pivoter latéralement ou verticalement et sont configurées pour ajuster les déclivités et les super dénivellations de la première voie (200) et de la deuxième voie (300).

8. Piste (100) selon la revendication 1, comprenant en outre :

des zones de décélération prévues aux points terminaux de la première voie (200) et de la deuxième voie (300), où la zone de décélération inclut un plateau ou une route montante et
où les longueurs des zones de décélération sont réglées de manière à ce que la voiture de course (10, 20) qui réalise la conduite est arrêtée avant d'atteindre l'extrémité de la zone de décélération.

9. Piste selon la revendication 1, **caractérisée en ce que** le niveau de difficulté de la piste est déterminé sur la base d'au moins une composante parmi la déclivité et la longueur de la voie rectiligne incluse dans la piste (100), la super dénivellation, la longueur et le rayon de rotation de la voie incurvée incluse dans la piste (100), les largeurs des voies de la piste, la distance de séparation (110) entre les voies, le nombre de voies incurvées et la distance entre les voies incurvées incluses dans la piste (100).

【FIG. 1】

【FIG. 2】

210

【FIG. 3】

【FIG. 4】

【FIG. 5】

【FIG. 6】

**EP 3 527 720 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011014850 A
- CN 103446756
- US 2007111768 A